# EUROPEAN PATENT APPLICATION

(11) **EP 1 555 391 A2**
(43) Date of publication of application: **20.07.2005**
(21) Application number: 04256960.8
(22) Date of filing: 10.11.2004
(51) Int. Cl.: F01D 5/28

(54) **Hybrid ceramic matrix composite turbine blade**

(30) Priority: 15.01.2004 US 758250
(71) Applicant: GENERAL ELECTRIC COMPANY, Schenectady, NY 12345 (US)
(72) Inventor: Carper, Douglas Melton, Trenton, Ohio 45067 (US); Subramanian, Suresh, Mason, Ohio 45040 (US); Jendrix, Richard William, Liberty Township, Ohio 45044 (US); Steibel, James Dale, Ohio 45040 (US)
(74) Representative: Goode, Ian Roy

(57) **Abstract**

A hybrid ceramic matrix composite turbine engine component is presented comprising an outer shell section(s) (36) and an inner core section(s) (34), wherein the outer shell section(s) (36) and the inner core section(s) (34) were bonded together using an MI process. The outer shell section(s) (36) comprises a SiC/SiC material that has been manufactured using a process selected from the group consisting of a slurry cast MI process and a prepreg MI process. The inner core section(s) (34) comprises a material selected from the group consisting an Si/SiC composite material and a monolithic ceramic material. The Si/SiC composite material may be manufactured using the Silcomp process. The turbine engine component may be a high pressure turbine blade, a high pressure turbine vane, a low pressure turbine blade (20), or a low pressure turbine vane.

## Description

The present invention relates generally to ceramic matrix composite turbine engine components, and more particularly, to a hybrid ceramic matrix composite turbine blade.

In order to increase the efficiency and the performance of gas turbine engines so as to provide increased thrust-to-weight ratios, lower emissions and improved specific fuel consumption, engine turbine are tasked to operate at higher temperatures. As the higher temperatures reach and surpass the limits of the material comprising the components in the hot section of the engine and in particular the turbine section of the engine, new materials must be developed.

As the engine operating temperatures have increased, new methods of cooling the high temperature alloys comprising the combustors and the turbine airfoils have been developed. For example, ceramic thermal barrier coatings (TBCs) were applied to the surfaces of components in the stream of the hot effluent gases of combustion to reduce the heat transfer rate and to provide thermal protection to the underlying metal and allow the component to withstand higher temperatures. These improvements helped to reduce the peak temperatures and thermal gradients. Cooling holes were also introduced to provide film cooling to improve thermal capability or protection. Simultaneously, ceramic matrix composites were developed as substitutes for the high temperature alloys. The ceramic matrix composites (CMCs) in many cases provided an improved temperature and density advantage over the metals, making them the material of choice when higher operating temperatures were desired. However, their material properties, for example, fracture resistance, particularly at low temperatures, has posed an impediment to more widespread use in the engine.

A number of techniques have been used in the past to manufacture thick dovetail sections of turbine engine components using both polymeric and ceramic matrix composites. These techniques include the use of insert plies and preform inserts in the dovetail section to build up thicknesses. The local properties of the composite are typically optimized by selecting the appropriate ply stacking sequence. One of the main challenges in manufacturing turbine blades using composite materials is the building up of the thick dovetail section of such turbine blades. Due to the relatively brittle nature of the ceramic matrix composites (CMCs), particularly at low temperatures, and the unique processing step used to make these materials such as melt infiltration and chemical vapor infiltration, the concepts that have been used in the past for polymeric matrix composites (PMCs) are not directly useful here, since such concepts do not fully densify thicker portions of CMCs, which are required for turbine blade dovetail sections. High compressive strength is required in the centermost regions of the dovetail section of turbine blades. Such high compressive strength is not achieved when the thick dovetail section of CMC turbine blades is not fully densified. In addition, the material density in the dovetail section of CMC turbine blades is not predictable because of the level of densification that does occur is unpredictable. What is needed is a method that fully densifies thick dovetail sections of CMC turbine blades in a predictable manner to produce a CMC turbine blade having high temperature capability.

According to the present invention, there is provided a ceramic matrix composite turbine engine component comprising: a core insert section comprising a material selected from the group consisting of a silicon-silicon carbide composite and a monolithic ceramic; and an outer shell section comprising a silicon carbide-silicon carbide composite material, wherein the at least one outer shell section and the at least one core insert section are bonded together using a silicon melt infiltration process.

Improvements in manufacturing technology and materials are the keys to increased performance and reduced costs for many articles. As an example, continuing and often interrelated improvements in processes and materials have resulted in major increases in the performance of aircraft gas turbine engines, such as the improvements of the present invention. A novel method for manufacturing a turbine blade made from a ceramic matrix composite (CMC) produces a dovetail section having increased strength and toughness thereby improving the functionality of the component. The high strength of the dovetail section of the turbine blades produced by the method of the present invention overcomes the problem of weak dovetail sections caused by failure to attain full densification within the dovetail sections of previously manufactured CMC turbine blades.

The turbine section of the engine is aft of the combustor section and converts the hot gases of combustion from the combustion of the fuel into mechanical energy. The turbine section includes a high pressure turbine section (HPT), positioned immediately aft of the combustor section, and a low pressure turbine section (LPT) positioned immediately behind the HPT. Combustion gases moving past the HPT are very energetic, and the HPT blades are small. As the gases expand and move rearward, they become less energetic. The LPT blades, in order to extract the maximum amount of energy from the less energetic fluid, are longer and extend further outward into the expanding annuli of the turbine section. Although generally applicable to all turbine blades, the present invention is particularly directed to the longer, larger LPT blades. The present invention enables manufacture of larger blades having even thicker dovetails that otherwise could not be fully densified to acceptable levels of compressive strength. In addition, the present invention provides a predictable material density, which is not possible with prior art methods of manufacture.

Turbine blades generally include an airfoil against which the flow of hot exhaust gas is directed and are mounted to turbine disks by a dovetail that extends downwardly from the airfoil and engages a slot on the turbine disk. A platform extends longitudinally outward from the area where the airfoil is joined to the dovetail being substantially perpendicular to the airfoil extending in a first direction away from the platform and the dovetail extending in a second direction away from the platform and opposite the first direction. The airfoil may be described as having a root end adjacent to the platform, and an oppositely disposed tip end remote from the platform that extends into the hot air stream from the combustor section of the engine. The dovetail may be described as having a first end adjacent to the platform and an oppositely disposed tip end remote from the dovetail.

The dovetail, named for its shape, is designed to allow assembly into a correspondingly shaped slot in the turbine disk. The dovetail experiences very high shear stresses, as it must counteract the rotational forces that would otherwise eject the blade from the disk. These forces increase as the weight of the blade increases. Thus, these forces are higher for LPT blades than for HPT blades. In order to achieve the required thickness build up in the dovetail section of CMC turbine blades, a number of techniques can be used. In the present invention, a novel technique includes manufacturing the turbine blade from a pre-fabricated core insert section(s) and an outer shell section(s). The core insert section(s) is made from either the same material as the outer shell section(s) or monolithic ceramic material. The core insert section(s) will have a cross-section varying over the length of the blade and is manufactured separately from the outer shell section(s), forming at least a portion of the dovetail section. The pre-fabricated core insert section(s) may form an inner portion of the turbine airfoil. The outer shell section(s) forms at least an outer portion of the turbine blade and at least an outer portion of the dovetail section. The thickness of the outer shell section(s) is selected based on the shear stress distribution of the part and may be in the thickness range that can be densified with silicon through melt infiltration easily without introducing significant porosity. The thickness of the outer shell section(s) is preselected based on the known shear stress distribution in the specific turbine blade. The interface between the outer shell section(s) and the core insert section(s) is selected so as to be located in a low shear stress region of the turbine blade.

Without wishing to be bound by theory, it is believed that a more complete densification can be obtained using the melt infiltration densification process than with other densification processes. Melt infiltration processes are the preferred method of manufacturing CMCs. Melt infiltration processes produce CMCs with the high thermal conductivity, as a result of substantially complete densification relative to other processes for a given configuration, that is required for CMCs to handle thermal stresses. In addition, melt infiltration provides high matrix cracking strength.

The properties of the core insert section(s) located in the low shear stress region typically differ from the outer shell section(s), which is located in high shear stress regions. The core insert section(s) may be made stiffer than the outer shell section(s) by manufacturing the core insert section(s) with less residual silicon content. CMCs produced using melt infiltration techniques typically contain silicon volume percent in the range of about 20 volume percent to about 30 volume percent of silicon in the SiC matrix. The core insert section(s) of the present invention can initially be made with less than about 5 volume percent silicon if a SilComp process is used and can be made with 0 volume percent if a sintered SiC core insert section(s) is used. Such a reduction would help to improve the vibration performance of the turbine blade as the change in stiffness from the outer shell to the core insert will reduce vibrations as the less rigid core insert section(s) absorbs the vibrational energy.

The density of the core insert section(s) may also be tailored by introducing microspheres comprising materials selected from the group consisting of carbon, glass, ceramic, and combinations thereof, into the core insert section(s) prior to silicon melt infiltration. Such use of carbon microspheres will change the modulus, while reducing the density of the core insert section(s) with as little reduction in stiffness as possible. The range of the carbon microsphere in the initial core insert section(s) is in the range of about 0 volume percent to about 50 volume percent.

Once the core insert section(s) is manufactured, the core insert section(s) and the outer shell section(s) are assembled, the core insert section(s) having been laid up in a preferred stacking sequence scheme using a slurry cast or a prepreg method. The outer shell sections and the inner core section(s) are assembled into a turbine blade form on a lay-up tool and cured in an autoclave in a conventional manner. The cured blade is densified using a silicon melt infiltration process that can fill the remaining porosity in the outer shell sections and possibly the inner core section(s), depending on the process used to manufacture the inner core section(s). The use of the silicon melt infiltration process yields a good bond at the interface between the inner core section(s) and outer shell section(s). This is particularly true when SilComp material is used for the core insert section(s), because residual silicon in the SilComp material softens during the melt infiltration of the outer shell section forming an integral bond with the outer shell through the mechanism of diffusion bonding. The dimensions of the outer shell section(s) and the inner core section(s) can be selected such that the high stress regions uses a high tensile strength and tough CMC and the inner core insert section(s) uses a high compressive strength material. Also, the skin core interface can be located in a low shear stress region of the part. The present invention is also a turbine engine component comprising at least one core insert section comprising a material selected from the group consisting of a silicon-silicon carbide composite, a silicon carbide-silicon carbide composite, and a monolithic ceramic; and at least one outer shell section comprising a silicon carbide-silicon carbide composite material, wherein the at least one outer shell section and the at least one core insert section were bonded together using a silicon melt infiltration process.

The present invention is also a turbine engine component comprising a core insert section comprising a material selected from the group consisting of a silicon-silicon carbide composite and a monolithic ceramic and an outer shell section comprising a silicon carbide-silicon carbide composite material, wherein the outer shell section and the core insert section were bonded together using a silicon melt infiltration process.

The present invention is also a method of manufacturing a ceramic matrix composite turbine component. The method of the present invention includes providing at least one core insert section having a preselected geometry, the at least one core insert section comprising a material selected from the group consisting of silicon carbide-silicon carbide composite preform having at least some porosity, silicon-silicon carbide composite, silicon-silicon carbide composite preform having at least some porosity, silicon-silicon carbide composite, and a monolithic ceramic. The process also includes providing a plurality of plies of silicon carbide prepreg cloth and laying up a preselected number of silicon carbide prepreg plies to form at least one outer shell section. At least one at least one core insert section is assembled with the at least one outer shell section into a turbine blade form, wherein the turbine blade form comprises a dovetail section and an airfoil section, and wherein the at least one core insert section is positioned in the dovetail section of the turbine blade form. The turbine blade form is then autoclaved. Remaining porosity in the turbine blade form is filled with at least silicon using a silicon melt infiltration process. The filler material also forms a bond between the at least one core insert section and the at least one outer shell preform.

The present is also another method of manufacturing a ceramic matrix composite turbine blade component. The method of the present invention includes providing a core insert section having a preselected geometry, the core insert section comprising a material selected from the group consisting of silicon carbide-silicon carbide composite preform having at least some porosity, silicon-silicon carbide composite, silicon-silicon carbide composite preform having at least some porosity, silicon-silicon carbide composite, and a monolithic ceramic. An outer shell section preform having at least some porosity is provided. The at least one core insert section and the at least one outer shell preform are laid up into a turbine blade form, the turbine blade form comprising a dovetail section and an airfoil section, wherein the at least one core insert section is positioned in the dovetail section of the turbine blade form. Remaining porosity in the turbine blade form is filled with at least silicon using a silicon melt infiltration process. The filler material also forms a bond between the core insert section and the outer shell preform.

An advantage of the present invention is that a thick CMC dovetail section for a turbine blade may be readily built up in which the properties of portions of the dovetail are tailored to meet the stresses to which they will be subjected.

Another advantage of the present invention is that it permits the fabrication of complex composite articles that are difficult or impossible to fabricate by conventional fabrication technology in which properties are substantially isotropic through the article.

Another advantage of the present invention is that different materials having different physical properties may be used within the dovetail section of the turbine blade to modify the physical properties of an otherwise unitary blade.

Another advantage of the present invention is that the ability of the composite to alternate vibrations improves its crack arresting capabilities as well as its ability to resist crack formation, thereby improving back fracture toughness and fatigue over the design life of the article.

Yet another advantage of the present invention is the ability to manufacturing larger turbine blades having thicker dovetails.

Other features and advantages of the present invention will be apparent from the following more detailed description of the preferred embodiment, taken in conjunction with the accompanying drawings which illustrate, by way of example, the principles of the invention, and in which

FIG. 1 is an exemplary example of a LPT blade in an aircraft engine.

FIG. 2 is a flow chart illustrating a method of manufacture of a CMC turbine blade of the present invention using a prepreg MI process.

FIG. 3 a flow chart illustrating an alternative method of manufacture of a CMC turbine blade of the present invention using a slurry cast MI process.

FIGS. 4, 5, 6 and 7 are cross-sectional views of embodiments of a CMC turbine blade dovetail of the present invention.

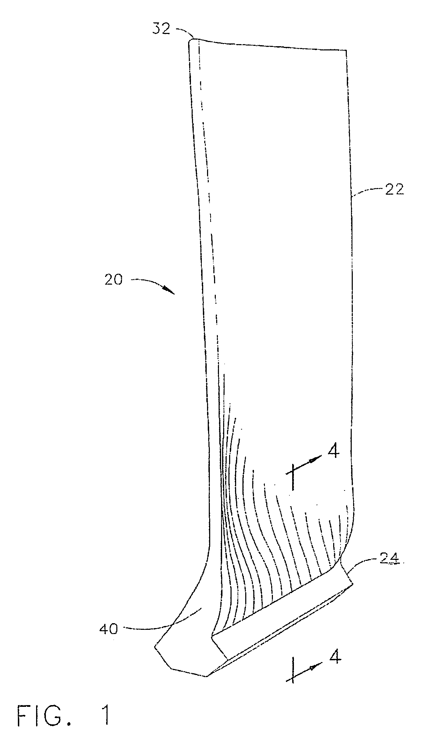

FIG. 1 depicts an exemplary aircraft engine LPT blade 20. In this illustration a turbine blade 20 comprises a ceramic matrix composite material. The turbine blade 20 includes an airfoil 22 against which the flow of hot exhaust gas is directed. The turbine blade 20 is mounted to a turbine disk (not shown) by a dovetail 24 that extends downwardly from the airfoil 22 and engages a slot of similar geometry on the turbine disk. The LPT blade of the present invnetion does not have an integral platform. A separate platform is provided to minimize the exposure of the dovetail to hot gases of combustion. The airfoil may be described as having a root end 40 and an oppositely disposed tip end 32.

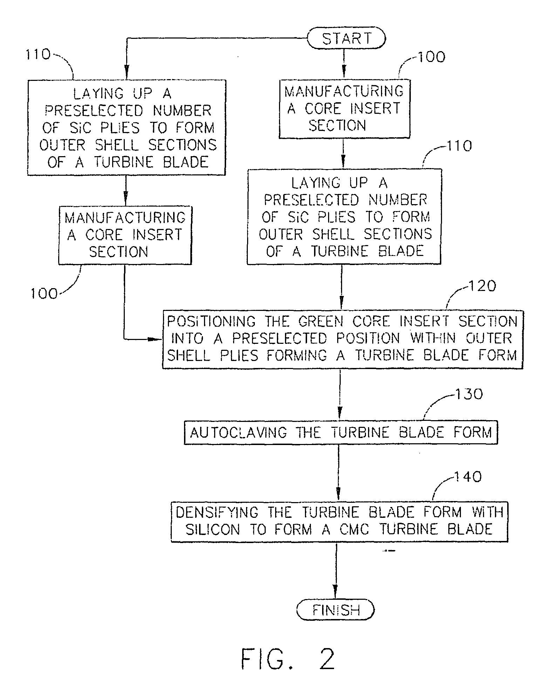

FIG. 2 is a flow chart illustrating a method of manufacture of a CMC turbine blade of the present invention using a method of silicon carbide-silicon carbide CMC manufacture known as a "prepreg" melt infiltration process (prepreg MI). Initially, outer shell SiC preforms are manufactured using plies of "prepregged" ceramic cloth. Such "prepregged" plies typically comprise silicon-carbide containing fibers wound onto a drum in a uni-directional manner to form a sheet. The fibers were previously coated with a ceramic layer such as boron nitride (BN) and silicon nitride (Si₃N₄) and that has been previously infiltrated with high char materials. By "silicon carbide-containing fiber" is meant a fiber having a composition that includes silicon carbide, and preferably is substantially silicon carbide. For instance, the fiber may have a silicon carbide core surrounded with carbon, or in the reverse, the fiber may have a carbon core surrounded by or encapsulated with silicon carbide. These examples are given for demonstration of the term "silicon carbide-containing fiber" and are not limited to this specific combination. Other fiber compositions are contemplated, so long as they include silicon carbide.

Exemplary processes for making such SiC/SiC prepreg material are described in U.S. Patent Nos. 6,024,898 and 6,258,737, which are assigned to the Assignee of the present invention and which are incorporated herein by reference.

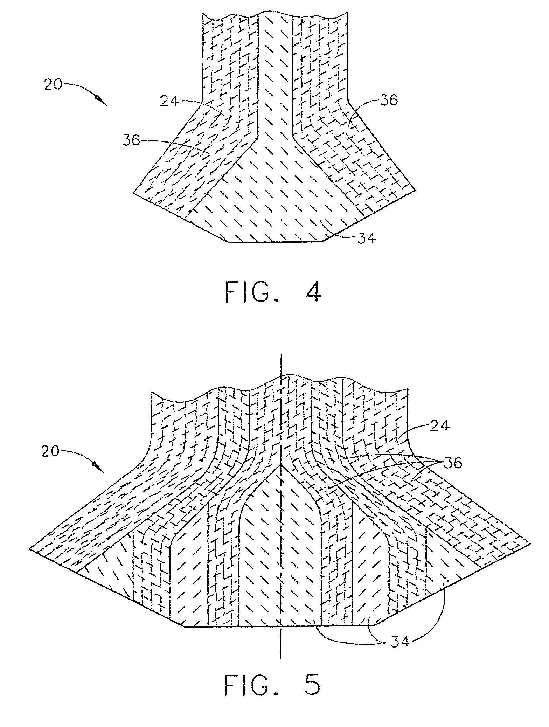

The first step of the process 100 is the manufacture of a core insert section. The number of such core insert sections that are assembled into a blade and their geometry will depend upon the number of outer shell sections preselected for the turbine blade. For example, as shown in FIG. 4, if two outer shell sections 36 are used for the turbine blade, then one core insert section 34 is required to go between the two outer shell sections. In an alternate embodiment, as shown in FIG. 5, where five outer shell sections 34 are manufactured, a total of five core insert sections 36 are required to build up the dovetail section 24 of the turbine blade.

Both the core insert section(s) and outer shell section(s) of the CMC turbine blade may be manufactured using the prepreg MI process. Alternatively the core insert section may comprise silicon-silicon carbide (Si/SiC) composite materials, made by a process known as "SilComp" may be used as the monolithic core insert section(s) of the present invention in conjunction with prepreg MI outer shell section(s). A technical description of such an Si/SiC composite material is described in detail in U.S. Patent No. 5,015,540, U.S. Patent No. 5,330,854, and U.S. Patent No. 5,336,350, which are all assigned to the Assignee of the present invention and which are incorporated by reference herein. The core insert section(s) may also be any other monolithic ceramic as known in the art. The size and composition of the core insert section(s) may be selectively tailored to provide the appropriate stiffness and density through such techniques as the addition of microspheres during manufacture of the core insert section(s), which causes the formation of porosity within the matrix. Additionally, the stiffness of the core insert section(s) could be made higher than the outer shell by reducing the residual silicon content in the core insert section(s) if desired. The SilComp core insert section(s) may or may not be densified through MI prior to the step 120 of positioning the core insert section(s) into a preselected position with respect to the laid-up outer shell section(s)

When the core insert section(s) and outer shell section(s) of the CMC turbine blades are both manufactured using the prepreg process, the manufacture of the core insert section(s) of the dovetail section of the turbine blade is accomplished by laying-up a preselected number of plies in a preselected orientation scheme on a lay-up tool to provide the appropriate mechanical properties for the turbine blade. Prepreg plies are comprised of bundled fiber tows that are positioned adjacent to one another such that all of the tows are aligned in the same direction. In terms of prepreg ply orientation, by "0° orientation," it is meant that the prepreg plies are laid up so that the tows are oriented in a preselected long dimension plane of the turbine blade lying substantially in the radial direction of the engine as known in the art. By "90° orientation," it is means that the plies are laid up such that the orientations of the tows are perpendicular to the preselected long dimension plane. All orientations of then 0° or 90° may be negative or positive depending on whether the ply is rotated clockwise (positive) from the preselected long dimension plane or rotated counterclockwise (negative) from the preselected long dimension plane as known in the art. In one embodiment a core insert section is laid up with 2-D prepreg plies cut to form the geometry of the core insert section when stacked. The 2-D prepreg plies are laid up in an alternative formation, such that the plies are at a 45° orientation, followed by a -45° orientation, followed by a 45° orientation, followed by a -45° orientation, etc. as known in the art. Such an orientation would maximize tensional rigidity of the core insert section. To complete the manufacture of the core insert section(s), the uncured core insert section(s) is then cured in an autoclave, as known in the art, and machined to the required geometry for the core insert section. The precursor material is referred to as "green" since it is still relatively flexible, as compared to the final ceramic matrix composite material, which is rather brittle.

The next step 110, which may occur in parallel with the prior steps for the core insert section(s), is laying up a preselected number of prepreg plies of silicon carbide cloth, which will form the outer shell section(s), in a preselected orientation scheme in a preselected stacking sequence. Alternatively, the order of steps 100 and 110 may be reversed. The next step 120 is positioning the core insert section(s) into a preselected position with respect to the laid-up outer shell section(s). The core insert section(s) is positioned in a manner to build up the dovetail section(s) of the turbine blade into the shape of the final dovetail section(s) of the turbine blade, producing a turbine blade form. The next step 130 is autoclaving the turbine blade form, as known in the art, to cure the uncured the outer shell section(s). The next step 140 densifies the turbine blade form using a silicon melt infiltration process as known in the art, forming the CMC turbine blade of the present invention. Such densification will create a strong bond at the interface between the outer shell section(s) and the core insert section(s). If the prepreg MI process was used to form the core insert section(s), the step 140 of densifying will further densify the core insert section(s). If the SilComp process was used to form the core insert section(s), and the core insert section(s) was not previously densified through MI, the step 140 of densifying also densify the outer shell section(s). If the SilComp process was used to form the core insert section(s), and the core insert section(s) was previously densified through MI, the step 140 of densifying will simply form a bond between the silicon of the core insert section(s) and the outer shell section(s). The resulting article comprises a unitary composite material structure with at least two separate sections with at least two of the sections having different materials properties. The article may be sized to be thicker or thinner as appropriate as known in the art.

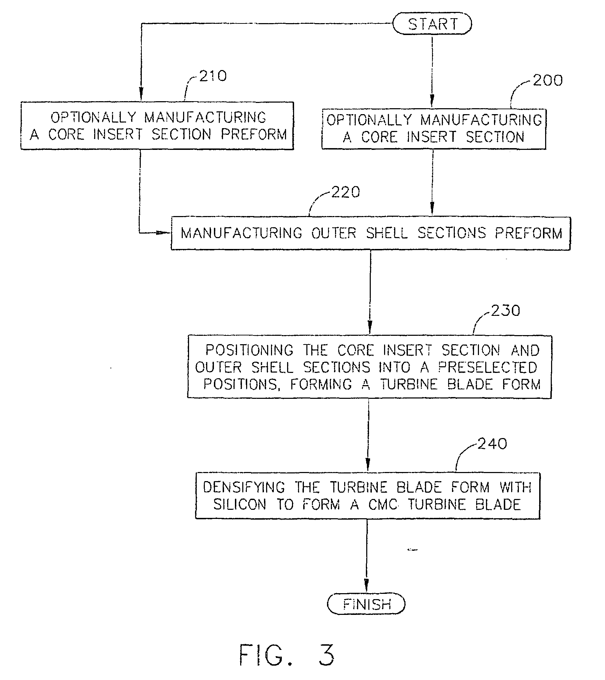

FIG. 3 is a flow chart illustrating a method of manufacture of a CMC turbine blade of the present invention using a method of silicon carbide-silicon carbide CMC manufacture known as a slurry cast melt infiltration process (slurry cast MI). Both the core insert section(s) and outer shell section(s) of the CMC turbine blade may be manufactured using the slurry cast MI process.

A technical description of such a slurry cast MI method is described in detail in U.S. Patent No. 6,280,550 B1, which is assigned to the Assignee of the present invention and which is incorporated herein by reference. The core insert section(s) may also be manufactured with the SilComp process.

The optional first step of the process 200 is the manufacture of a core insert section(s) preform using the slurry cast process, wherein some porosity remains in the core insert section(s). In a preferred embodiment, the porosity of the core insert section(s) will be in the range of about 20 volume percent to about 40 volume percent. The number of such core insert sections and their preselected geometry will depend upon the number of layers of outer shell sections preselected for the turbine blade and the mechanical properties required of the turbine blade. For example, as shown in FIG. 4, if two outer shell sections 36 are used for the turbine blade, and then one core insert section 34 is required to go between the two outer shell sections 36. In an alternate embodiment, as shown in FIG. 5, where five outer shell sections 36 are manufactured, a total of five core insert sections 34 are required to build up the dovetail section 24 of the turbine blade. Both the core insert section(s) and outer shell section(s) of the CMC turbine blade may be manufactured using the slurry cast MI process. The second optional first step of the process 210 is the manufacture of a SilComp Si/SiC core insert section(s). Alternatively the core insert section(s) may comprise silicon-silicon carbide (Si/SiC) composite materials, made by a process known as "SilComp" may be used as the monolithic core insert section(s) of the present invention in conjunction with prepreg MI outer shell section(s). The core insert section(s) may also be any other monolithic ceramic as known in the art. The size and composition of the core insert section(s) may be selectively tailored to provide the appropriate stiffness and density through such techniques as the addition of carbon microspheres during manufacture of the core insert section(s), which causes the formation of porosity within the matrix. Additionally, the stiffness of the core insert section(s) could be made higher than the shell by reducing the residual silicon content in the core insert section(s).

The next step 220 is the manufacture of an outer shell preform(s) using the slurry cast method, such a slurry cast method leaving the preform(s) with some porosity remaining. Alternatively, the order of steps 200 and 220 or 200 and 210 may be reversed or performed at the same time. The next step 230 is the positioning of the outer shell preform(s) and the core insert section(s) to form a turbine blade preform. The core insert section(s) is positioned within at least the dovetail section of the turbine blade form. The next step 240 is densifying the turbine blade form using a silicon melt infiltration process as known in the art, forming the CMC turbine blade of the present invention. Such densification will create a strong bond between the outer shell section(s) and the core insert section(s). If the slurry cast MI process was used for the core insert section(s), the step 240 of densifying will also densify the core insert section(s). If the SilComp process was used for the core insert section(s), and the core insert section(s) was not previously densified through MI, the step 140 of densifying will densify the core insert section(s) and the outer shell sections. If the SilComp process was used for the core insert section(s), and the core insert section(s) was previously densified through MI, the step 140 of densifying will simply form a bond between the silicon of the core insert section(s) and the outer shell sections. The resulting article comprises a composite material structure with at least two separate sections having different material properties. The article may be sized to be thicker or thinner as appropriate as known in the art.

In an additional, alternative embodiment, the outer shell section(s) are manufactured using a slurry cast MI process, while the core insert section(s) are manufactured using a prepreg MI process. In another additional alternative embodiment, the outer shell section(s) are manufactured using a prepreg MI process, while the core insert section(s) are manufactured using a slurry cast MI process.

The process of the present invention may be used to manufacture any turbine engine airfoil, including, but not limited to high pressure turbine blades, high pressure turbine vanes, low pressure turbine blades, and low pressure turbine vanes.

FIG. 4 is a cross-sectional view of a turbine blade dovetail 24 of an embodiment of a CMC turbine blade 20 of the present invention. The turbine blade 20 includes an airfoil (not shown) against which the flow of hot exhaust gas is directed. The turbine blade 20 is mounted to a turbine disk (not shown) by a dovetail 24 that extends downwardly from the airfoil and engages a slot on the turbine disk where it is secured in position. In the embodiment shown in FIG. 4, there is one silicon-silicon carbide ceramic matrix composite core insert section 34 that is manufactured using a SilComp method. Alternatively, the core insert section may be a monolithic ceramic material. There are also two outer silicon carbide-silicon carbide ceramic matrix composite shell sections 36 that have been manufactured using a slurry cast MI method. The bond between the core insert section 34 and the outer shell sections 36 is created during the final processing step of silicon melt infiltration.

FIG. 5 is a cross-sectional view of a turbine blade dovetail 24 of an embodiment of a CMC turbine blade 20 of the present invention. The turbine blade 20 includes an airfoil (not shown) against which the flow of hot exhaust gas is directed. The turbine blade 20 is mounted to a turbine disk (not shown) by a dovetail 24 that extends downwardly from the airfoil and engages a slot on the turbine disk where it is secured in position. In the embodiment shown in FIG. 5, there are four silicon-silicon carbide ceramic matrix composite core insert sections 34 that are manufactured using the Silcomp method. Alternatively, the core insert section may be a monolithic ceramic material. There are also two silicon carbide-silicon carbide outer shell sections 36 that are manufactured using a slurry cast MI. The bond between the core insert section 34 and the outer shell sections 36 are created during the final processing step of silicon melt infiltration.

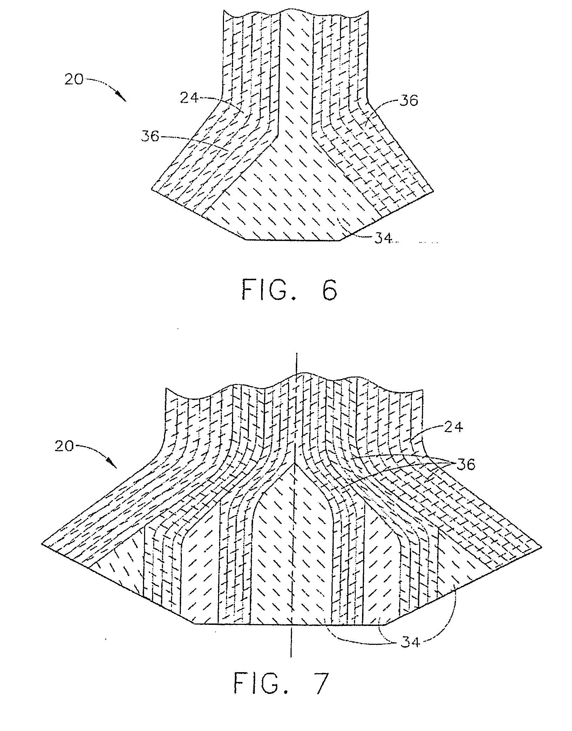

FIG. 6 is a cross-sectional view of a turbine blade dovetail 24 of an embodiment of a CMC turbine blade 20 of the present invention. The turbine blade 20 includes an airfoil (not shown) against which the flow of hot exhaust gas is directed. The turbine blade 20 is mounted to a turbine disk (not shown) by a dovetail 24 that extends downwardly from the airfoil and engages a slot on the turbine disk where it is secured in position. In the embodiment shown in FIG. 6, there is one silicon-silicon carbide ceramic matrix composite core insert section 34 that is manufactured using a SilComp method. Alternatively, the core insert section may be a monolithic ceramic material. There are also two outer silicon carbide-silicon carbide ceramic matrix composite shell sections 36 that have been manufactured using a prepreg MI method. The bond between the core insert section 34 and the outer shell sections 36 is created during the final processing step of silicon melt infiltration.

FIG. 7 is a cross-sectional view of a turbine blade dovetail 24 of an embodiment of a CMC turbine blade 20 of the present invention. The turbine blade 20 includes an airfoil (not shown) against which the flow of hot exhaust gas is directed. The turbine blade 20 is mounted to a turbine disk (not shown) by a dovetail 24 that extends downwardly from the airfoil and engages a slot on the turbine disk where it is secured in position. In the embodiment shown in FIG. 7, there are four silicon-silicon carbide ceramic matrix composite core insert sections 34 that are manufactured using the Silcomp method. Alternatively, the core insert section may be a monolithic ceramic material. There are also two silicon carbide-silicon carbide outer shell sections 36 that are manufactured using a prepreg MI. The bond between the core insert section 34 and the outer shell sections 36 are created during the final processing step of silicon melt infiltration.

The present invention is also a turbine engine airfoil comprising an outer shell section(s) and an inner core section(s), wherein the outer shell section(s) and the inner core section(s) are bonded together using an MI process. The outer shell section(s) comprises a SiC/SiC material that is manufactured using a process selected from the group consisting of a slurry cast MI process and a prepreg MI process. The inner core section(s) comprises a material selected from the group consisting of a SiC/SiC composite material manufactured using a slurry cast MI process or a prepreg MI process, an Si/SiC composite material, and a monolithic ceramic material. The Si/SiC composite material may be manufactured using the Silcomp process. The present invention may be a high pressure turbine blade, a high pressure turbine vane, a low pressure turbine blade, or a low pressure turbine vane.

## Claims

1. A ceramic matrix composite turbine engine component comprising:
a core insert section (34) comprising a material selected from the group consisting of a silicon-silicon carbide composite and a monolithic ceramic; and
an outer shell section (36) comprising a silicon carbide-silicon carbide composite material, wherein the at least one outer shell section and the at least one core insert section are bonded together using a silicon melt infiltration process.

2. The turbine engine component of claim 1, wherein the component comprises a plurality of outer shell sections (36).

3. The turbine engine component of claim 1, wherein the component comprises a plurality of core insert sections (34) and a plurality of outer shell sections (36).

4. The turbine engine component of claim 1, wherein the core insert section (34) is a silicon-silicon carbide composite.

5. The turbine engine component of claim 4, wherein the core insert section (34) is manufactured using a Silcomp process.

6. The turbine engine component of claim 1, wherein the core insert section (34) is a monolithic ceramic material.

7. The turbine engine component of 2, wherein the outer shell section (36) is silicon carbide-silicon carbide composite material.

8. The turbine engine component of claim 7, wherein the outer shell section (36) is manufactured using a slurry cast melt infiltration process.

9. The turbine engine component of claim 7, wherein the outer shell section (36) is manufactured using a prepreg melt infiltration process.

10. The turbine engine component of claim 1, wherein the component is a turbine vane.
